(19) Europäisches Patentamt / European Patent Office / Office européen des brevets

(11) **EP 4 372 452 B1**

(12) **EUROPEAN PATENT SPECIFICATION**

(45) Date of publication and mention
of the grant of the patent:
**03.09.2025 Bulletin 2025/36**

(21) Application number: **23210393.7**

(22) Date of filing: **16.11.2023**

(51) International Patent Classification (IPC):
***G02B 27/01*** *(2006.01)*     ***G02B 30/00*** *(2020.01)*

(52) Cooperative Patent Classification (CPC):
**G02B 27/18; H04N 9/3111; H04N 9/3164;**
G02B 27/0172; G02B 30/10; G02B 2027/0112;
G02B 2027/012; G02B 2027/0145

(54) **NEAR-EYE LIGHT FIELD PROJECTOR WITH LOW IMAGE NOISE**

AUGENNAHER LICHTFELDPROJEKTOR MIT NIEDRIGEM BILDRAUSCHEN

PROJECTEUR DE CHAMP LUMINEUX PROCHE DE L'ŒIL À FAIBLE BRUIT D'IMAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.11.2022 EP 22207858**

(43) Date of publication of application:
**22.05.2024 Bulletin 2024/21**

(73) Proprietor: **CREAL SA**
**1024 Ecublens VD (CH)**

(72) Inventor: **Smolik, Grégoire**
**Chavannes-près-Renens (CH)**

(74) Representative: **P&TS SA (AG, Ltd.)**
**Avenue J.-J. Rousseau 4**
**P.O. Box 2848**
**2001 Neuchâtel (CH)**

(56) References cited:
**EP-A2- 0 949 826**     **US-A1- 2011 149 359**
**US-A1- 2020 049 995**

## Description

### Technical domain

The present disclosure concerns a near-eye light field projector that sequentially projects a near-eye projected image to the eyes of a user. The near-eye light field projector allows for projecting images where unwanted diffraction orders do not overlap with the image and unwanted diffraction orders are reduced. More particularly, the present disclosure concerns a near-eye light field projector that is adapted for virtual, augmented, mixed reality glasses applications. The present disclosure further concerns a wearable device comprising the near-eye light field projector, such as augmented/mixed reality or smart glasses.

### Related art

Known near-eye light field projectors comprise a light source typically comprising an array of point-light sources that are collimated into collimated beams. The collimated beams illuminate a spatial light modulator (SLM) or diffraction grating under a different set of angles of incidence. Each reflected (or transmitted) beam will carry out a certain image information, produced by the modulation of the SLM or diffraction grating. Intermediate optics re-images the point-light sources into viewpoints. The viewpoints form a light field eye box, allowing a user to see an authentic 3D rendering of a digital scene.

The SLM or diffraction grating typically comprises a two-dimensional array of pixels. The illumination of a two-dimensional array of pixels is equivalent to the illumination of a two-dimensional grating. The collimated illumination of a two-dimensional grating may produce a two-dimensional diffraction interference pattern when viewed at infinity. The pattern consists of multiple diffraction orders with varying intensity. The diffraction interference pattern can be observed in the Fourier plane of the SLM or diffraction grating. In the diffraction interference pattern, the maximum intensity of the center of the diffraction envelope may not match the center of the diffraction pattern. The maximum diffraction may not correspond with the zero order, and multiple diffraction orders with relatively high intensities can be observed instead of a single bright image. Thus, this is detrimental to the light-field image since the information a viewer sees comprises multiple images of various intensities (ghost images) coming from various directions.

Document US20180160784 A1 discloses an optical system that includes a micro-mirror array optical modulator of the digital light processing (DLP) type. An optical element has an optimized limiting aperture for defining portions of a modulated light beam that are blocked and remaining portions that are transmitted. The optical element allows for optimizing light collection and contrast in a projection device.

US 2020 049995 A1 discloses a near-to-eye display device comprising a light source, a spatial light modulator, and a spatial filter.

### Summary

The present disclosure concerns a near-eye light field projector comprising a light source comprising a plurality of point-light sources arranged in a light source plane, wherein at least two point-light sources have different wavelengths, and each point-light source is configured to emit an incident light beam. The projector further comprises a modulation device configured to diffract the incident light beams and generate diffracted modulated light beams. The projector further comprises projection optics configured to project the diffracted modulated light beams and form images in an image plane, the images forming a two-dimensional diffraction interference pattern comprising a plurality of diffraction orders, and relay optics configured to receive the images and to form viewpoints in a viewpoint plane destined to be in a user's eye box. The point-light sources are arranged in the light source plane such that the modulated light beams comprise combined modulated light beams forming combined images, each combined image corresponding to an image of the point-light sources of different wavelength, and diffracted modulated light beams forming diffracted images. The light field projector further comprises a spatial filter configured to block the diffracted modulated light beams forming the diffracted images, such that the relay optics projects only viewpoints from the combined images.

Said at least two point-light sources are arranged in the light source plane such that the diffracted images are distant from a combined image by the image separation distance large enough to avoid the diffracted images overlapping the combined image. A viewpoint separation distance between two adjacent combined viewpoints is such that at least two combined viewpoints simultaneously enter a viewpoint plane opening of between 2 and 8 mm in the viewpoint plane.

The present disclosure further concerns a wearable device comprising the near-eye light field projector, such as augmented/mixed reality or smart glasses.

The near-eye light field projector allows avoiding unwanted diffraction orders of a diffraction interference pattern produced by the modulation device to overlap with the projected image to the eyes of a user. The near-eye light field projector further allows point-light sources having different wavelengths to overlap in a single combined image.

The invention is defined in the appended claims.

**Short description of the drawings**

Exemplar embodiments of the invention are disclosed in the description and illustrated by the drawings in which:

Fig. 1a represents a near-eye light field projector comprising a light source having a plurality of point-light sources generating incident light beams forming point-light images in an image plane, a modulation device, projection optics, and relay optics;

Fig. 1b shows a simplified representation , not according to the claimed invention, of the light field projector of Fig. 1a, without the relay optics;

Fig. 2 shows a simplified representation of the light field projector, where the modulation device diffracts the incident light beams;

Fig. 3a shows a simplified representation , not according to the claimed invention, of the light field projector without the relay optics, wherein the light source comprises point-light sources of different wavelengths;

Fig. 3b shows the light field projector of Fig. 3a further comprising the relay optics and a spatial filter;

Fig. 3c shows the light field projector of Fig. 3a and 3b showing the light source, according to another embodiment;

Fig. 4 represent a spatial filter comprising an array of pinholes;

Fig. 5 illustrates a method for obtaining an optimized arrangement of the point-light sources in a light source plane of the light source,

Fig. 6 shows a diffraction interference pattern generated in the image plane by the incident light beams diffracted by the modulation device;

Fig. 7 represents an optimized lattice of the viewpoints; and

Fig. 8 shows a typical light source pattern after the optimization process, where light sources belonging to a single viewpoint are tagged with the same number.

**Examples of embodiments**

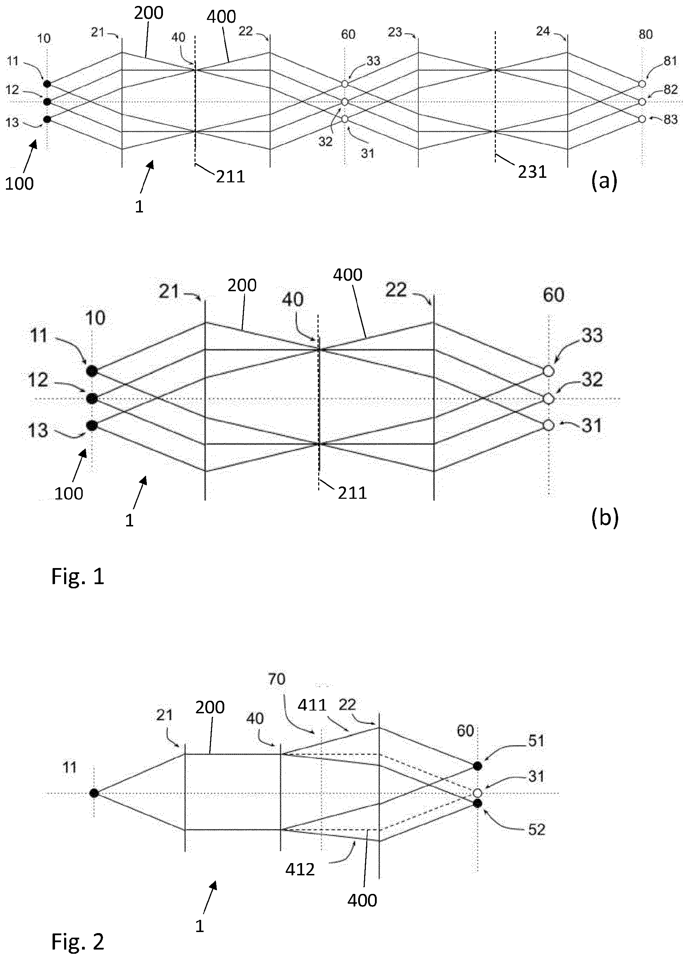

**Fig. 1a** represents a sequential near-eye light field projector 1 comprises a light source 100 comprising a plurality of point-light sources 11, 12, 13, wherein at least two point-light sources have different wavelengths. Each point-light source 11, 12, 13 is configured to emit an incident light beam 200. The point-light sources 11, 12, 13 can be arranged in a light source plane 10. The point-light sources 11, 12, 13 can comprise LEDs, $\mu$LEDs, lasers, or any other point-light-sources capable of emitting an incident light beam 200.

Each point-light source 11, 12, 13 can be configured to emit an incident light beam 200 of which a wavelength spectrum is a narrow band. Then, the point-light sources 11, 12, 13 can comprise point-light sources capable of emitting a narrow-band incident light beam 200 of which a wavelength spectrum is a narrow band.

The point-light sources 11, 12, 13 are configured to illuminate a modulation device 40 configured to modulate the incident light beams 200 and generate modulated light beams 400 and a point-light image 31, 32, 33 of each point-light source, for each incident light beam 200. The modulation device 40 can comprise a spatial light modulator (SLM) that behaves like a diffraction grating. The spatial light modulator 40 can comprise a two-dimensional array of pixels. The illumination of a two-dimensional array of pixels is equivalent to the illumination of a two-dimensional grating. In one aspect, the SLM 40 can comprise an electrically addressed spatial light modulator ferroelectric liquid crystals (FLCoS) or a digital light processing (DLP). Here, a pixel can be a single mirror of a DLP-type SLM or a pixel in an FLCOS device, etc.

The light field projector 1 further comprises projection optics 21, 22 configured to project the incident light beams 200 and form the point-light images 31, 32, 33 in an image plane 60. In the example of Figs. 1a and b, the projection optics comprise a first projection optics 21 configured to form a first focal plane 211, and a second projection optics 22 configured to project the point-light image 31, 32, 33 of the modulated light beams 400 in the image plane 60. In some embodiments, the first projection optics 21 can be configured to collimate the incident light beams 200 (see Fig. 2), such that the incident light beams 200 are collimated.

In one aspect, the modulation device 40 can be arranged in the first focal plane 211. More generally, the modulation device 40 can be arranged so that the modulator is completely illuminated by the incident light beams 200.

The light field projector 1 can further comprise relay optics. For example, the relay optics can comprise a first relay optical element 23 configured to project the modulated light beams 400 and form intermediate images (not shown) in an intermediate image plane 231 and a second relay optical element 24 configured to project the modulated beam light 400 to form viewpoints 81, 82, 83 in a viewpoint plane 80. The viewpoint plane 80 can correspond to an eye box of a user. In the absence of diffraction by modulation device 40, the viewpoints 81, 82, 83 appear to be coming from a single point in space with a specific direction.

In one aspect, the plurality of optical elements 21, 22 and relay optics 23, 24 can comprise lenses or metalenses.

The near-eye light field projector 1 is configured for sequentially generating the virtual viewpoints 81, 82, 83 that form the light-field.

Fig. 1b shows a simplified representation , not according to the claimed invention, of the light field projector 1 without the relay optics 23, 24.

Depending on the type of modulation device 40, the latter can diffract the incident light beams 200 and produces a two-dimensional diffraction interference pattern when viewed at infinity. For example, Fig. 2 shows a simplified representation of the light field projector 1 without the relay optics 23, 24, where the modulation device 40 illuminated by the incident light beams 200 diffracts the incident light beams 200. The modulation device 40 projects modulated light beams 400 comprising diffracted beams 411, 412 forming diffracted images 51, 52 (diffraction orders forming a diffraction interference pattern). In Fig. 2, only one point-light source 11 is represented and is diffracted by the modulation device 40 into a plurality of diffracted beams 411, 412 (two are shown) which form a plurality of diffracted images 51, 52 (two are shown). In the absence of diffraction interference, the modulated light beams 400 (shown by the dashed lines) would form the point-light image 31.

The degradation of the information viewed at the viewpoints 81, 82, 83 due to diffraction interference may not be significant when a user is looking at an image in the focal plane of the modulation device 40 (for example at infinity). However, when a user's eye focuses on a different plane than the plane where the modulation device 40 is arranged (such as the first focal plane 211), for example a focus plane indicated by numeral 70 in Fig. 2, the information at the viewpoints 81, 82, 83 appears as coming from multiple directions, for instance, as many directions as there are diffraction orders.

More particularly, the diffracted images 51, 52 create a two-dimensional diffraction interference pattern overlapping the point-light images 31 (in the absence of diffraction) in the image plane 60. The two-dimensional diffraction interference pattern may comprise multiple diffraction orders with varying intensity. Since the diffraction orders appear in the image plane 60, which may or may not coincide with the Fourier plane of the second projection optics 22, the diffraction pattern forms a grid of diffraction orders which appear in the image plane 60.

Therefore, the user sees two identical diffracted images 51, 52 at the same time, the modulated beams 411, 412 being displaced in the focus plane 70. This is detrimental to the light-field image as it creates multiple images of various intensities (ghost images) coming from the wrong directions, adding noise. Moreover, the diffraction interference pattern can vary for each wavelength of the incident light beams 200. This results in red, green, and blue modulated beams 411, 412 for a single viewpoint that seem to come from different directions as well.

An example of modulation device 40 generating a diffraction interference pattern can comprise DLP-type SLM. For instance, the DLP® digital micromirror device (DMD) from Texas Instrument comprises tilting mirrors. The illumination of an array of tilted mirrors is equivalent to the illumination of a blazed grating. Blazed gratings produce diffraction orders where the maximum intensity of the diffracted light does not coincide with the direction of specular reflection. In other words, the center of the diffraction envelope does not match the center of the diffraction interference pattern. Here, the diffraction envelope corresponds to the diffraction pattern of a single pixel of the modulation device 40.

This results in an illumination pattern at infinity where the maximum of diffraction does not correspond with the zero order. Consequently, multiple diffraction orders with relatively high intensities can be observed instead of a single bright spot.

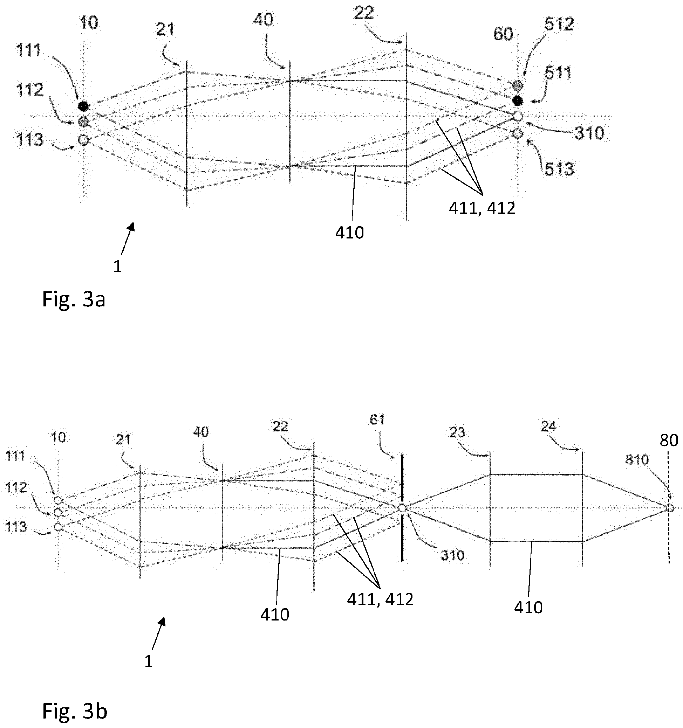

Fig. 3a shows a simplified representation , not according to the claimed invention, of the light field projector 1 without the relay optics 23, 24, wherein the light source 100 comprises point-light sources 111, 112, 113 of different wavelengths. The point-light sources 111, 112, 113 are spatially separated in the light source plane 10. In one aspect, the point-light sources 111, 112, 113 can be arranged in the light source plane 10 such that part of the diffracted modulated light beams 411, 412 are combined (in combined modulated light beams 410) to form combined images 310. Each combined image 310 corresponds to an image of the multiple point-light sources 111, 112, 113 of different wavelengths.

The point-light sources 111, 112, 113 can be arranged in the light source plane 10 by placing the different point-light sources 111, 112, 113 at defined positions along the orthogonal axis x, y in the light source plane 10.

Other diffracted modulated light beams 411, 412 form diffracted images 511, 512 in the image plane 60. In the example of Fig. 3a, the light source 100 is shown comprising three point-light sources 111, 112, 113, each having a different wavelength.

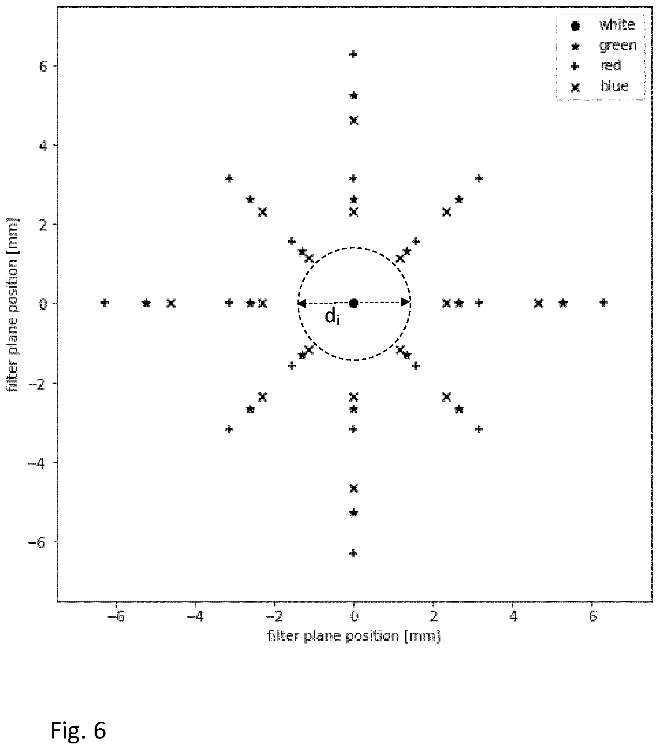

The point-light sources 111, 112, 113 can be further arranged in the light source plane 10 such that the diffracted images 511, 512 are distant from a combined image 310 by an image separation distance $d_i$ that is large enough such that the diffracted images 511, 512 do not overlap the combined image 310. Since the image separation distance $d_i$ only depends on the wavelength and the grating pitch. Thus, the image separation distance $d_i$ depends on the distance set by the shortest wavelength (see Fig. 6).

Fig. 3b shows the light field projector 1 of Fig. 3a further comprising the relay optics 23, 24 and a spatial filter 61. The spatial filter 61 is configured to filter unwanted diffraction orders, i.e., to block the propagation of the diffracted modulated light beam 411, 412 that form the diffracted images 511, 512. The diffracted modulated light beam 411, 412 thus cannot form diffracted viewpoints in the viewpoint plane 80. Consequently, only the combined modulated light beams 410 are allowed to propagate and pass through the relay optics 23, 24, forming combined viewpoints 810 in the viewpoint plane 80.

Although Fig. 3b shows only one combined viewpoint 810, the light field projector 1 is configured to from at least two combined viewpoint 810, where each combined viewpoint 810 corresponds to a projected image in the viewpoint plane 80, that appears to be always in focus and appears to be coming from a single point in space with a specific direction.

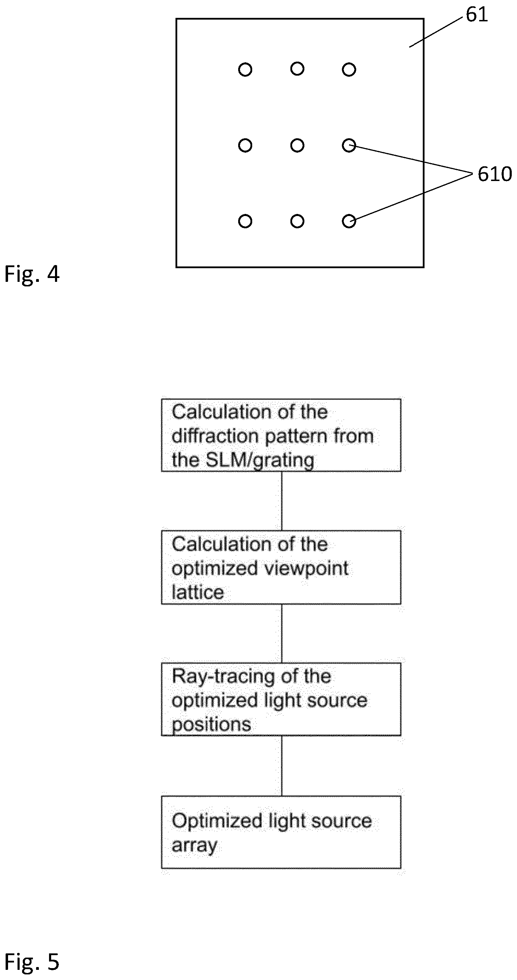

The spatial filter 61 can comprise an array of pinholes 610 (see Fig. 4). Here, the point-light sources 111, 112, 113 should be arranged in the light source plane 10 such that the positions of the combined images 310 correspond to the positions of the pinholes 610. The array can be a regular array or any irregular or random array of pinholes 610. The unwanted diffraction orders (diffracted images 511, 512) do not pass through the pinholes 610 and are blocked by the spatial filter 61. Moreover, the point-light sources 111, 112, 113 should be arranged in the light source plane 10 such that the unwanted diffraction orders corresponding to a given combined viewpoint 810 do not overlap another combined viewpoint. The pinholes 610 can have a lateral size that is equal or smaller than the image separation distance $d_i$.

Alternatively, the spatial filter 61 can comprise a wavelength filter. In the case the light source 100 comprises point-light sources 111, 112, 113 that emit light in a narrow band, each point-light source 111, 112, 113 can be individually filtered by the wavelength filter 61.

Alternatively, the spatial filter 61 can comprise an active shutter array. The use of an active shutter array also allows for relaxing the requirement that the point-light sources 111, 112, 113 should be arranged in the light source plane 10 such that the unwanted diffraction orders corresponding to a given combined viewpoint 810 do not overlap another combined viewpoint. On the other hand, an active shutter array requires a fast shutter speed, matching the high speed of the modulation device 40, and more especially of the SLM. In one aspect, the spatial filter 61 can comprise an electro-optical shutter used as a tunable filter.

The spatial filter 61 can be arranged in the image plane 60. Alternatively, the spatial filter 61 can be arranged in the vicinity of the image plane 60, where the distance between the spatial filter 61 and the image plane 60 should be small enough such that the spatial filter 61 allows the selective passage of the combined modulated light beams 410 while blocking the diffracted beams 411, 412.

The light field projector 1 of Fig. 3b allows for a user to see a light field image with correct depth of focus cues when combined viewpoints 810 reach the user's eye pupil.

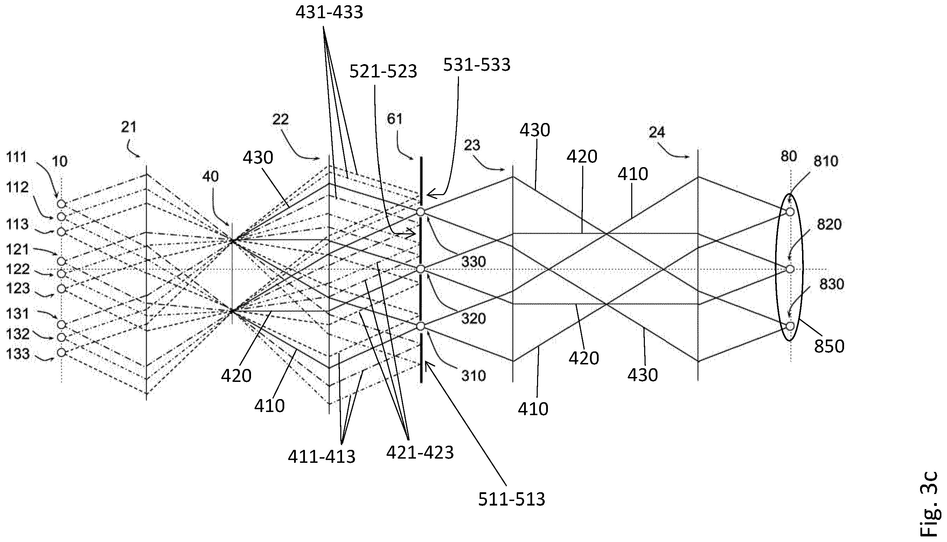

Fig. 3c shows the light field projector 1 of Fig. 3a and 3b showing the light source 100 comprising point-light sources 111, 112, 113, 121, 122, 123, 131, 132, 133 of different wavelengths. The point-light sources 111-133 are spatially separated in the light source plane 10. When illuminating the modulation device 40, the point-light sources 111, 112, 113 generate modulated light beams comprising diffracted beams 411, 412, 413, the point-light sources 121, 122, 123 generate modulated light beams comprising diffracted beams 421, 422, 423, and the point-light sources 131, 132, 133 generate modulated light beams comprising diffracted beams 431, 432, 433. The diffracted beams 411-413, 421-423, 431-433 form, respectively, diffracted images 511-513, 521-523, 531-533 (diffraction orders forming a diffraction interference pattern).

The point-light sources 111-113 are arranged in the light source plane 10 such that at least a portion of the diffracted modulated light beams 411-413 are combined in a combined modulated light beams 410 to form a combined image 310. Similarly, point-light sources 121-123 and 131-133 are arranged in the light source plane 10 such that at least a portion of the diffracted modulated light beams 421-423 and 431-423 are combined in a combined modulated light beams 420 and 430, respectively, to form a combined image 320 and 330.

The spatial filter 61 is configured to filter unwanted diffraction orders from the diffracted modulated light beams 411-433. In other words, the spatial filter 61 is configured to allow only the combined modulated light beams 410, 420, 430 and the combined images 310, 320, 330 to propagate towards the viewpoint plane 80 while preventing the diffracted modulated light beams 411-433 and diffracted images 511-533 to pass through the spatial filter 61. Thus, only the combined images 310, 320, 330 propagate through the relay optical elements 23, 24, and form combined viewpoints 810, 820, 830 in the viewpoint plane 80.

In an embodiment, the combined viewpoints 810, 820, 830 are configured to be formed in the viewpoint plane 80 (and reach the user's eye) simultaneously. This requires that a viewpoint separation distance $d_v$ between two adjacent combined viewpoints 810, 820, 830 is such that at least two but preferably more than three combined viewpoints 810, 820, 830 enter simultaneously a viewpoint plane opening 850 (see Fig. 3c) in the viewpoint plane 80. The viewpoint plane opening 850 can typically correspond to an eye pupil.

The plurality of combined viewpoints 810, 820, 830 simultaneously entering the viewpoint plane opening 850 (for example pupil) allows the formation of a light field image with correct depth cues. More particularly, the viewpoint separation distance $d_v$ between two adjacent combined viewpoints 810, 820, 830 is such that at least two but preferably more than three combined viewpoints 810, 820, 830 simultaneously enter the viewpoint plane opening 850 having a lateral size of between 2 and 8 mm. In a particular embodiment, the viewpoint separation distance $d_v$ is such that more than ten combined viewpoints 810, 820, 830 simultaneously enter the viewpoint plane opening 850 having a lateral size of between 2 and 8 mm.

Increasing the number of combined viewpoints 810, 820, 830 entering the viewpoint plane opening 850 requires increasing the proximity of the diffraction orders (diffracted images 511-533) relative to the combined images 310, 320, 330 and thus, decreasing the image separation distance $d_i$.

In an embodiment, the spatial filter 61 comprises an array of pinholes 610 and the point light sources 111-133 are arranged in the light source plane 10 such that the unwanted diffraction orders corresponding to a given combined image 310, 320, 330 do not pass through any one of the pinholes 610.

Although only three combined images 310-330 and combined viewpoints 810-830 are represented in Fig. 3c, the light field projector 1 can comprise a greater number of the combined images and combined viewpoints, wherein the plurality of combined viewpoints 810-830 are formed simultaneously in the viewpoint plane 80 to improve the light field image viewed by the user. The spatial filter 61 should be configured to let pass only the combined images 310-330 towards the viewpoint plane 80 and block all diffracted images 511-533.

Fig. 5 illustrates a method for obtaining an optimized arrangement of the point-light sources 111-133 in the light source plane 10, in order to avoid unwanted diffraction orders of a diffraction interference pattern produced by the modulation device do not overlap with the projected image to the eyes of a user, thus minimizing ghost images and noise. The method comprises the steps of:

calculating a diffraction interference pattern from the modulation device 40;

calculating an optimized lattice of combined and diffracted images 310-330, 511-533, where the diffracted images 511-533 are distant from a combined image 310-330 by an image separation distance $d_i$; and

from the optimized lattice of combined and diffracted images 310-330, 511-533, calculating an optimized arrangement of the point-light sources 111-133 in the light source plane 10.

The diffraction interference pattern produced by the wavelength of each point-light source 111-133 can be calculated using the grating equation (1), which provides the diffraction angle in the plane along the plane of the modulation device 40, i.e., along orthogonal axis x, y of the modulation device 40:

$$\theta m \ = arcsin \left( sin \ \theta_i - \frac{m\lambda}{d} \right) \qquad \text{Eq 1,}$$

where m is the diffraction order, $\lambda$ is the wavelength, d is the period of the grating, $\theta_i$ the incident angle of an incident light beam 200 on the modulation device 40, and $\theta_m$ the output angle of a modulated light beam 400-430, 411-433. The diffraction interference pattern forms a grid of diffraction orders which appear in the image plane 60.

A combined image 310-330 can be formed by the superposition of three point-light sources 111-133, each having a different wavelength. Knowing the diffraction interference patterns for each wavelength, it is possible to calculate the sum of all diffraction interference patterns, as shown in Fig. 6. This pattern corresponds to the diffraction interference pattern created by a two-dimensional grating, combined with the diffraction of a pixel of the modulation device 40.

In the example of Fig. 6, the diffraction interference pattern is generated from a red, green and blue point-light sources 111-133 that are spatially shifted in the light source plane 10 such as to overlap their brightest diffraction orders and forming a white spot, the white spot corresponding to the combined image 310-330. Fig. 6 only represents a limited number of diffraction orders.

The theoretical amplitude of a diffraction order is proportional to equation (2) (see reference: *Using Lasers with DLP DMD technology,* DLPA037, Texas Instruments, Sept 2008, https://www.ti.com/lit/pdf/dlpa037):

$$Sinc^2 \left[ \pi \frac{a}{\lambda} (sin \ \theta_{m_x} - sin \ \theta_i) \right] Sinc^2 \left[ \pi \frac{a}{\lambda} (sin \ \phi_{m_y} - sin \ \phi_i) \right] \qquad \text{Eq 2,}$$

where $\theta$ and $\phi$ are the angles of diffraction in the two axis x, y of the modulation device 40, a is the lateral size of a pixel of the modulation device 40, $m_x$ and $m_y$ are the diffraction orders in the different orthogonal axis x, y of the modulation device 40, $\lambda$ is the wavelength, and i denotes the angle of the center of the diffraction envelope (specular reflection). The calculated diffraction interference pattern takes into account multiple orders of diffraction for each axis x, y of the modulation device 40.

The optimized lattice of combined and diffracted images 310-330, 511-533 is then calculated by maximizing the distance between the positions of the combined and diffracted images 511-533 and the secondary diffraction orders in the image plane 60, such that the diffracted images 511-533 are distant from a combined image 310-330 by the image separation distance $d_i$.

Calculating an optimized arrangement of the point-light sources 111-133 in the light source plane 10 thus depends on the number of combined viewpoints 810-830 entering the viewpoint plane opening 850. The image separation

distance $d_i$ and the viewpoint separation distance $d_v$ decrease with increasing the number of combined viewpoints 810-830 entering the viewpoint plane opening 850. The optimized arrangement of the point-light sources 111-133 in the light source plane 10 can be calculated such that the viewpoint separation distance $d_v$ between two adjacent combined viewpoints 810, 820, 830 is such that at least two but preferably more than three combined viewpoints 810, 820, 830 enter simultaneously a viewpoint plane opening 850 of between 2 and 8 mm in the viewpoint plane 80.

In one aspect, when the combined and diffracted images 310-330, 511-533 are imaged at an eye pupil (at the viewpoint plane 80), diffracted viewpoints (not shown) from the diffracted modulated light beams 411-433 can be separated from each combined viewpoint 810-830 from the combined images 310-330, by a viewpoint separation distance $d_v$ corresponding to a diameter of at least 0.2 mm around the combined viewpoint 810-830. This condition corresponds to the image separation distance $d_i$ multiplied by a magnification factor of the relay optics 23, 24. If the latter condition is fulfilled, the combined viewpoints 810-830 are free of unwanted diffraction orders in a circle of at least 0.2 mm diameter. Unwanted diffraction orders cannot be seen when the combined modulated light beams 410 are projected at the pupil of a user.

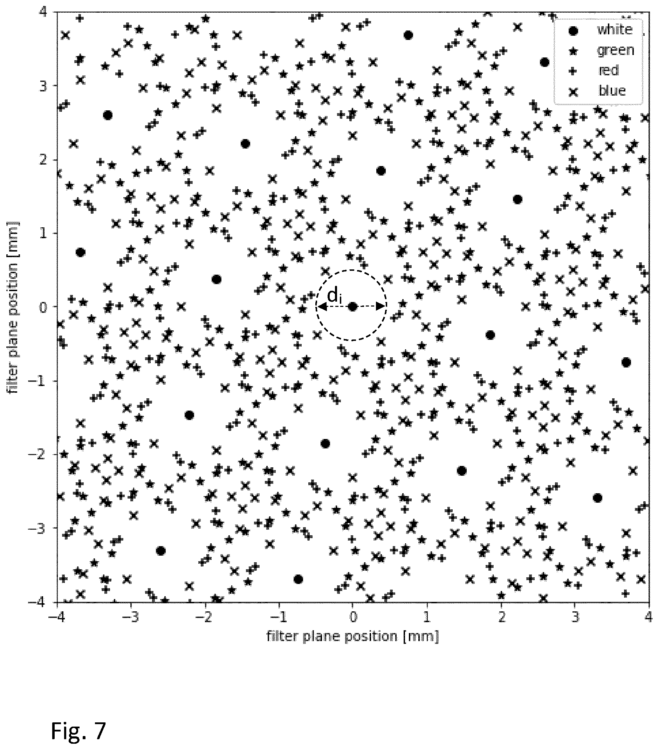

An example of an optimized lattice of combined and diffracted images 310-330, 511-533 is represented in Fig. 7. In this example, the optimized lattice is obtained with the diffraction interference pattern of the diffracted images 511-533 is generated by red, green, and blue point-light sources 111-133 and the optimized arrangement of the point-light sources 111-133 in the light source plane 10. Only a limited number of diffraction orders are represented in Fig. 7.

Calculating an optimized arrangement of the point-light sources 111-133 in the light source plane 10 can be performed by ray tracing using a complete optical model of the near-eye light field projector 1, i.e., a numerical model including the optical components between the light source plane 10 and the image plane 60, allowing to simulate accurately the propagation of light in the near-eye light field projector 1. This step can comprise calculating positions for the different point-light sources 111-133 along the orthogonal axis x, y in the light source plane 10.

In one aspect, the output intensity of the combined images 310-330 can be maximized by selecting the brightest diffraction order that matches a desired combined or diffracted image 310-330, 511-533. In other words, a refraction angle with which the combined modulated light beam 410-430 outputs the modulation device 40 is selected. The refraction angle corresponds to a position in the orthogonal axis x, y of the image plane 60.

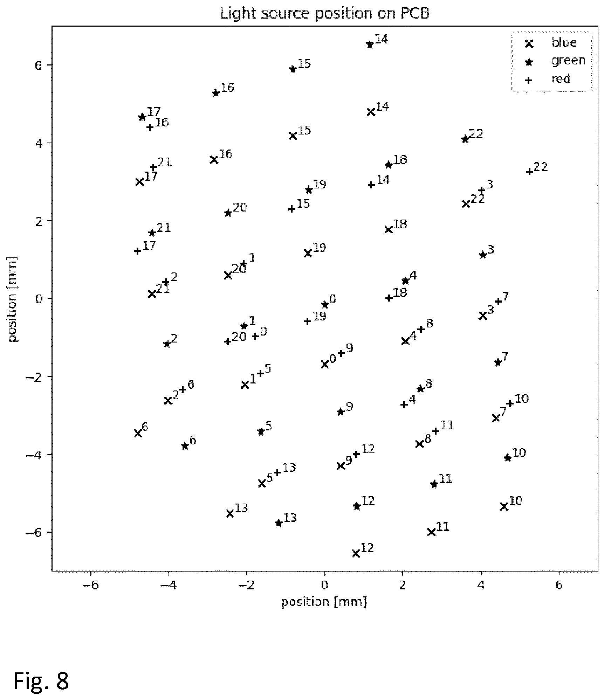

In certain instances, the brightest diffraction order matching a desired combined or diffracted image 310-330, 511-533 may not be the absolute brightest diffraction order. In that case, the step of calculating an optimized lattice of point-light sources 111-133 in the light source plane 10 can be repeated for each combined or diffracted image 310-330, 511-533 and each wavelength $\lambda$. An example of a resulting optimized lattice of point-light sources 111-133 producing combined and diffracted images 310-330, 511-533 is shown in Fig. 8, where the point-light sources 111-133 belonging to a single combined image 310-330 are tagged with the same number.

In the case the spatial filter 61 comprises an active shutter array (such as an electro-optical shutter) used as a tunable filter, the optimized arrangement of the point-light sources 111-133 in the light source plane 10 can be calculated individually per diffracted image 310-330, without taking into account possible overlap between different combined images 310-330 and diffracted images 511-533.

The present disclosure further concerns a wearable device comprising the near-eye light field projector. The wearable device can comprise an augmented reality device, a wearable mixed reality device, or smart glasses.

Reference symbols in the figures

| | |
|---|---|
| 1 | near-eye light field projector |
| 10 | light source plane |
| 100 | light source |
| 11, 12, 13 | point light source |
| 111, 112, 113 | point light source |
| 121, 122, 123 | point light source |
| 131, 132, 133 | point light source |
| 21 | optical element, first projection optics |
| 22 | optical element, second projection optics |
| 23 | relay optics, first relay optical element |
| 24 | relay optics, second relay optical element |
| 200 | incident light beam |
| 211 | first focal plane |
| 231 | intermediate image plane |
| 31, 32, 33 | point-light image |

| 310-330 | combined image |
| 40 | modulation device |
| 400 | modulated light beam |
| 410-430 | combined modulated light beam |
| 411-413 | diffracted modulated light beam |
| 421-423 | diffracted modulated light beam |
| 431-433 | diffracted modulated light beam |
| 51, 52 | diffracted images |
| 511-513 | diffracted images |
| 521-523 | diffracted images |
| 531-533 | diffracted images |
| 60 | image plane |
| 61 | spatial filter |
| 610 | pinhole |
| 70 | focus plane |
| 80 | viewpoint plane, eye box |
| 810-830 | combined viewpoint |
| 81, 82, 83 | viewpoint |
| 850 | viewpoint plane opening |
| di | image separation distance |
| $d_v$ | viewpoint separation distance |

**Claims**

1. A near-eye light field projector (1) comprising:

   a light source (100) comprising a plurality of point light sources (111-133) arranged in a light source plane (10), wherein at least two point-light sources (111-133) have different wavelengths and each point light source (111-133) is configured to emit an incident light beam (200);
   a modulation device (40) configured to diffract the incident light beams (200) and generate modulated light beams (410, 411-433);
   projection optics (21, 22) configured to project the modulated light beams (410, 411-433) and form images (310-330, 511-533) in an image plane (60), the images (310, 511-533) forming a two-dimensional diffraction interference pattern comprising a plurality of diffraction orders; and
   relay optics (23, 24) configured to receive the images (310, 511-533) and to form viewpoints (810-830) in a viewpoint plane (80) destined to be in a user's eye box;
   wherein the point light sources (111-133) are arranged in the light source plane (10) such that the modulated light beams comprise combined modulated light beams (410, 411-433) forming combined images (310-330), each combined image (310-330) corresponding to an image of the point-light sources (111-133) of different wavelength, and diffracted modulated light beams (411-433) forming diffracted images (511-533);
   wherein the light field projector (1) further comprises a spatial filter (61) configured to block the diffracted modulated light beams (411-433), such that the relay optics (23, 24) projects only viewpoints (810-830) from the combined images (310-330);
   wherein said at least two point-light sources (111-133) are arranged in the light source plane (10) such that the diffracted images (511-533) are distant from a combined image (310-330) by the image separation distance ($d_i$) large enough to avoid the diffracted images (511-533) overlapping the combined image (310-330); and
   wherein a viewpoint separation distance ($d_v$) between two adjacent combined viewpoints (810, 820, 830) is such that at least two combined viewpoints (810, 820, 830) simultaneously enter a viewpoint plane opening (850) of between 2 and 8 mm in the viewpoint plane (80).

2. The projector according to claim 1,
   wherein the image separation distance ($d_i$) multiplied by a magnification factor of the relay optics (23, 24) corresponds to a diameter of at least 0.2 mm around the viewpoints (810-830).

3. The projector according to claim 1 or 2,
   wherein the spatial filter (61) comprises an array of pinholes (610).

4. The projector according to claim 1 or 2,

wherein the spatial filter (61) comprises a wavelength filter or an active shutter array.

5. The projector according to claim 4,
wherein the spatial filter (61) comprises an active shutter array used as a tunable filter.

6. The projector according to any one of claims 1 to 5,
wherein the projection optics comprise a first projection optics (21) configured to form a first focal plane (211), and a second projection optics (22) configured to project the combined images (310-330) in the image plane (60).

7. The projector according to claim 6,
wherein the modulation device (40) is arranged in the first focal plane (211).

8. The projector according to any one of claims 1 to 7,
wherein the spatial filter (61) is arranged in the image plane (60).

9. A method for arranging the point light sources (111-133) in the light source plane (10) of the near-eye light field projector (1) according to any one of claims 1 to 8, comprising:

calculating the diffraction interference pattern from the modulation device (40);
calculating an optimized lattice of combined and diffracted images (310-330, 511-533), where the diffracted images (511-533) are distant from a combined image (310-330) by an image separation distance ($d_i$); and
from the optimized lattice of combined and diffracted images (310-330, 511-533), calculating an optimized arrangement of the point-light sources (111-133) in the light source plane (10).

10. The method according to claim 9,

wherein said calculating a diffraction interference pattern comprises using the grating equation:

$$\theta m = arcsin\left(sin\,\theta_i - \frac{m\lambda}{d}\right),$$

where m is the diffraction order, $\lambda$ is the wavelength, d is the period of the grating, $\theta_i$ the incident angle of the incident light beam (200) on the modulation device 40, and $\theta_m$ the output angle of the modulated light beam (410, 411-433); and calculating the amplitude of a diffraction order using equation:

$$Sinc^2\left[\pi\frac{a}{\lambda}\left(sin\,\theta_{m_x} - sin\,\theta_i\right)\right]Sinc^2\left[\pi\frac{a}{\lambda}\left(sin\,\phi_{m_y} - sin\,\phi_i\right)\right]$$

where $\theta$ and $\phi$ are the angles of diffraction in the two axis x, y of the modulation device (40), a is the lateral size of a pixel of the modulation device (40), $m_x$ and $m_y$ are the diffraction orders along orthogonal axis x, y of the modulation device (40), $\lambda$ is the wavelength, and i is the angle of the center of the diffraction envelope of the diffraction interference pattern.

11. The method according to claim 9 or 10,
wherein the output intensity of the combined images (310-330) is maximized by selecting the brightest diffraction order that matches a desired combined or diffracted image (310-330, 511-533).

12. The method according to any one of claims 9 to 11,
wherein said calculating an optimized arrangement of the point light sources (111-133) in the light source plane (10) can be performed by ray tracing using a complete optical model of the system.

13. Wearable device comprising the near-eye light field projector according to any one of claims 1 to 8.

14. Wearable device according to claim 13,
comprising an augmented reality device, a wearable mixed reality device, or smart glasses.

**Patentansprüche**

1. Augennaher Lichtfeldprojektor (1), umfassend:

   eine Lichtquelle (100), welche eine Vielzahl von Punktlichtquellen (111-133) umfasst, die in einer Lichtquellenebene (10) angeordnet sind, worin mindestens zwei Punktlichtquellen (111-133) unterschiedliche Wellenlängen aufweisen und jede Punktlichtquelle (111-133) dazu konfiguriert ist, einen einfallenden Lichtstrahl (200) auszusenden;
   eine Modulationsvorrichtung (40), welche dazu konfiguriert ist, die einfallenden Lichtstrahlen (200) zu beugen und modulierte Lichtstrahlen (410, 411-433) zu erzeugen;
   eine Projektionsoptik (21, 22), welche dazu konfiguriert ist, die modulierten Lichtstrahlen (410, 411-433) zu projizieren und Bilder (310-330, 511-533) in einer Bildebene (60) zu erzeugen, wobei die Bilder (310, 511-533) ein zweidimensionales Beugungsinterferenzmuster bilden, welches eine Vielzahl von Beugungsordnungen umfasst; und
   eine Relaisoptik (23, 24), welche dazu konfiguriert ist, die Bilder (310, 511-533) zu empfangen und Blickpunkte (810-830) in einer Blickpunktebene (80) zu bilden, die dazu bestimmt ist, sich in der Eyebox eines Benutzers zu befinden;
   worin die Punktlichtquellen (111-133) in der Lichtquellenebene (10) derart angeordnet sind, dass die modulierten Lichtstrahlen kombinierte modulierte Lichtstrahlen (410, 411-433) umfassen, welche kombinierte Bilder (310-330) bilden, wobei jedes kombinierte Bild (310-330) einem Bild der Punktlichtquellen (111-133) unterschiedlicher Wellenlänge entspricht, und wobei gebeugte modulierte Lichtstrahlen (411-433) gebeugte Bilder (511-533) bilden;
   worin der Lichtfeldprojektor (1) zudem ein Raumfilter (61) umfasst, welches dazu konfiguriert ist, die gebeugten modulierten Lichtstrahlen (411-433) zu blockieren, sodass die Relaisoptik (23, 24) nur Ansichtspunkte (810-830) aus den kombinierten Bildern (310-330) projiziert;
   worin die besagten mindestens zwei Punktlichtquellen (111-133) in der Lichtquellenebene (10) derart angeordnet sind, dass die gebeugten Bilder (511-533) von einem kombinierten Bild (310-330) um den Bildabstand ($d_i$) entfernt sind, der gross genug ist, um eine Überlappung der gebeugten Bilder (511-533) mit dem kombinierten Bild (310-330) zu vermeiden; und
   worin ein Blickpunkttrennungsabstand ($d_v$) zwischen zwei benachbarten kombinierten Blickpunkten (810, 820, 830) so ist, dass mindestens zwei kombinierte Blickpunkte (810, 820, 830) gleichzeitig in eine Blickpunktebenen-Öffnung (850) von zwischen 2 und 8 mm in der Blickpunktebene (80) eintreten.

2. Projektor gemäss Anspruch 1, worin der mit einem Vergrösserungsfaktor der Relaisoptik (23, 24) multiplizierte Bildabstand ($d_i$) einem Durchmesser von mindestens 0,2 mm um die Blickpunkte (810-830) entspricht.

3. Projektor gemäss Anspruch 1 oder 2, worin das Raumfilter (61) eine Anordnung von Nadellöchern (610) umfasst.

4. Projektor gemäss Anspruch 1 oder 2, worin das Raumfilter (61) ein Wellenlängenfilter oder ein aktives Verschlussarray umfasst.

5. Projektor gemäss Anspruch 4, worin das Raumfilter (61) ein aktives Verschlussarray umfasst, das als abstimmbares Filter verwendet wird.

6. Projektor gemäss irgendeinem der Ansprüche 1 bis 5, worin die Projektionsoptik eine erste Projektionsoptik (21) umfasst, die zum Bilden einer ersten Brennebene (211) konfiguriert ist, und eine zweite Projektionsoptik (22) umfasst, die zum Projizieren der kombinierten Bilder (310-330) in die Bildebene (60) konfiguriert ist.

7. Projektor gemäss Anspruch 6, worin die Modulationseinrichtung (40) in der ersten Brennebene (211) angeordnet ist.

8. Projektor gemäss irgendeinem der Ansprüche 1 bis 7, worin das Raumfilter (61) in der Bildebene (60) angeordnet ist.

9. Verfahren zum Anordnen der Punktlichtquellen (111-133) in der Lichtquellenebene (10) des augennahen Lichtfeldprojektors (1) gemäss irgendeinem der Ansprüche 1 bis 8, umfassend:

   Berechnen des Beugungsinterferenzmusters aus der Modulationsvorrichtung (40);
   Berechnen eines optimierten Gitters aus kombinierten und gebeugten Bildern (310-330, 511-533), worin die gebeugten Bilder (511-533) um einen Bildabstand ($d_i$) von einem kombinierten Bild (310-330) entfernt sind; und

aus dem optimierten Gitter der kombinierten und gebeugten Bilder (310-330, 511-533), Berechnung einer optimierten Anordnung der Punktlichtquellen (111-133) in der Lichtquellenebene (10).

10. Verfahren gemäss Anspruch 9,

worin das besagte Berechnen eines Beugungsinterferenzmusters die Verwendung der Gittergleichung umfasst:

$$\theta m = arcsin \left( sin\, \theta_i - \frac{m\lambda}{d} \right),$$

worin m die Beugungsordnung, $\lambda$ die Wellenlänge, d die Periode des Gitters, $\theta_i$ der Einfallswinkel des einfallenden Lichtstrahls (200) auf die Modulationsvorrichtung 40 und $\theta_m$ der Ausgangswinkel des modulierten Lichtstrahls (410, 411-433) ist; und Berechnen der Amplitude einer Beugungsordnung unter Verwendung der Gleichung:

$$Sinc^2 \left[ \pi \frac{a}{\lambda} \left( sin\, \theta_{m_x} - sin\, \theta_i \right) \right] Sinc^2 \left[ \pi \frac{a}{\lambda} \left( sin\, \phi_{m_y} - sin\, \phi_i \right) \right]$$

worin $\theta$ und $\varphi$ die Beugungswinkel in den beiden Achsen x, y des Modulationsgeräts (40), a die laterale Grösse eines Pixels des Modulationsgeräts (40), $m_x$ und $m_y$ die Beugungsordnungen entlang der orthogonalen Achsen x, y des Modulationsgeräts (40), $\lambda$ die Wellenlänge und i der Winkel des Zentrums der Beugungshüllkurve des Beugungsinterferenzmusters ist.

11. Verfahren gemäss Anspruch 9 oder 10, worin die Ausgabeintensität der kombinierten Bilder (310-330) maximiert wird, indem die hellste Beugungsordnung ausgewählt wird, die einem gewünschten kombinierten oder gebeugten Bild (310-330, 511-533) entspricht.

12. Verfahren gemäss irgendeinem der Ansprüche 9 bis 11, worin das besagte Berechnen einer optimierten Anordnung der Punktlichtquellen (111-133) in der Lichtquellenebene (10) durch Raytracing unter Verwendung eines vollständigen optischen Modells des Systems durchgeführt werden kann.

13. Tragbares Gerät, welches den augennahen Lichtfeldprojektor gemäss irgendeinem der Ansprüche 1 bis 8 umfasst.

14. Tragbares Gerät gemäss Anspruch 13, welches ein Augmented-Reality-Gerät, ein tragbares Mixed-Reality-Gerät oder Smart Glasses umfasst.


**Revendications**

1. Projecteur de champ lumineux proche de l'œil (1), comprenant :

une source lumineuse (100) comprenant une pluralité de sources lumineuses ponctuelles (111-133) disposées dans un plan de source lumineuse (10), dans lequel au moins deux sources lumineuses ponctuelles (111-133) ont des longueurs d'onde différentes et chaque source lumineuse ponctuelle (111-133) est configurée pour émettre un faisceau lumineux incident (200) ;
un dispositif de modulation (40) configuré pour diffracter les faisceaux lumineux incidents (200) et générer des faisceaux lumineux modulés (410, 411-433) ;
une optique de projection (21, 22) configurée pour projeter les faisceaux lumineux modulés (410, 411-433) et former des images (310-330, 511-533) dans un plan image (60), les images (310, 511-533) formant un motif d'interférence de diffraction bidimensionnel comprenant une pluralité d'ordres de diffraction ; et
des optiques de relais (23, 24) configurées pour recevoir les images (310, 511-533) et pour former des points de vue (810-830) dans un plan de point de vue (80) destiné à se trouver dans le champ visuel d'un utilisateur ;
dans lequel les sources lumineuses ponctuelles (111-133) sont disposées dans le plan de source lumineuse (10) de telle sorte que les faisceaux lumineux modulés comprennent des faisceaux lumineux modulés combinés (410, 411-433) formant des images combinées (310-330), chaque image combinée (310-330) correspondant à une image des sources lumineuses ponctuelles (111-133) de différentes longueurs d'onde, et des faisceaux lumineux modulés diffractés (411-433) formant des images diffractées (511-533) ;
dans lequel le projecteur de champ lumineux (1) comprend en outre un filtre spatial (61) configuré pour bloquer les faisceaux lumineux modulés diffractés (411-433), de telle sorte que les optiques de relais (23, 24) projettent uniquement les points de vue (810-830) à partir des images combinées (310-330) ;

dans lequel lesdites au moins deux sources lumineuses ponctuelles (111-133) sont disposées dans le plan de la source lumineuse (10) de telle sorte que les images diffractées (511-533) soient éloignées d'une image combinée (310-330) d'une distance de séparation d'image (di) suffisamment grande pour éviter que les images diffractées (511-533) ne se chevauchent sur l'image combinée (310-330) ; et

dans lequel une distance de séparation des points de vue (dv) entre deux points de vue combinés adjacents (810, 820, 830) est telle qu'au moins deux points de vue combinés (810, 820, 830) pénètrent simultanément dans une ouverture de plan de point de vue (850) comprise entre 2 et 8 mm dans le plan de point de vue (80).

2. Le projecteur selon la revendication 1,
dans lequel la distance de séparation des images (di) multipliée par un facteur d'agrandissement de l'optique relais (23, 24) correspond à un diamètre d'au moins 0,2 mm autour des points de vue (810-830).

3. Le projecteur selon la revendication 1 ou 2,
dans lequel le filtre spatial (61) comprend un réseau de sténopes (610).

4. Le projecteur selon la revendication 1 ou 2,
dans lequel le filtre spatial (61) comprend un filtre de longueur d'onde ou un réseau d'obturateurs actifs.

5. Le projecteur selon la revendication 4,
dans lequel le filtre spatial (61) comprend un réseau d'obturateurs actifs utilisé comme filtre accordable.

6. Le projecteur selon l'une quelconque des revendications 1 à 5,
dans lequel l'optique de projection comprend une première optique de projection (21) configuré pour former un premier plan focal (211), et une deuxième optique de projection (22) configuré pour projeter les images combinées (310-330) dans le plan image (60).

7. Le projecteur selon la revendication 6,
dans lequel le dispositif de modulation (40) est disposé dans le premier plan focal (211).

8. Le projecteur selon l'une quelconque des revendications 1 à 7,
dans lequel le filtre spatial (61) est disposé dans le plan image (60).

9. Procédé pour disposer les sources lumineuses ponctuelles (111-133) dans le plan de la source lumineuse (10) du projecteur de champ lumineux proche de l'œil (1) selon l'une quelconque des revendications 1 à 8, comprenant :

le calcul du motif d'interférence de diffraction à partir du dispositif de modulation (40) ;
le calcul d'un réseau optimisé d'images combinées et diffractées (310-330, 511-533), où les images diffractées (511-533) sont éloignées d'une image combinée (310-330) d'une distance de séparation d'image (di) ; et
à partir du réseau optimisé d'images combinées et diffractées (310-330, 511-533), calculer un agencement optimisé des sources lumineuses ponctuelles (111-133) dans le plan de la source lumineuse (10).

10. Procédé selon la revendication 9,

dans lequel ledit calcul d'un motif d'interférence de diffraction comprend l'utilisation de l'équation du réseau :

$$\theta m = arcsin\left(sin\,\theta_i - \frac{m\lambda}{d}\right)$$

où m est l'ordre de diffraction, $\lambda$ est la longueur d'onde, d est la période du réseau de diffraction, $\theta_i$ est l'angle d'incidence du faisceau lumineux incident (200) sur le dispositif de modulation 40, et $\theta_m$ est l'angle de sortie du faisceau lumineux modulé (410, 411-433) ; et calculer l'amplitude d'un ordre de diffraction à l'aide de l'équation :

$$Sinc^2\left[\pi\frac{a}{\lambda}\left(sin\,\theta_{m_x} - sin\,\theta_i\right)\right]Sinc^2\left[\pi\frac{a}{\lambda}\left(sin\,\phi_{m_y} - sin\,\phi_i\right)\right]$$

où $\theta$ et $\phi$ sont les angles de diffraction dans les deux axes x, y du dispositif de modulation (40), a est la taille latérale d'un pixel du dispositif de modulation (40), $m_x$ et $m_y$ sont les ordres de diffraction le long des axes orthogonaux x, y du dispositif de modulation (40), $\lambda$ est la longueur d'onde, et i est l'angle du centre de l'enveloppe de diffraction du motif d'interférence de diffraction.

11. Procédé selon la revendication 9 ou 10,
dans lequel l'intensité de sortie des images combinées (310-330) est maximisée en sélectionnant l'ordre de diffraction le plus brillant qui correspond à une image combinée ou diffractée souhaitée (310-330, 511-533).

12. Procédé selon l'une quelconque des revendications 9 à 11,
dans lequel ledit calcul d'un agencement optimisé des sources lumineuses ponctuelles (111-133) dans le plan des sources lumineuses (10) peut être effectué par lancer de rayons à l'aide d'un modèle optique complet du système.

13. Dispositif portable comprenant le projecteur de champ lumineux proche de l'œil selon l'une quelconque des revendications 1 à 8.

14. Dispositif portable selon la revendication 13,
comprenant un dispositif de réalité augmentée, un dispositif de réalité mixte portable ou des lunettes intelligentes.

Fig. 1

Fig. 2

Fig. 3a

Fig. 3b

Fig. 3c

Fig. 4

Calculation of the diffraction pattern from the SLM/grating

Calculation of the optimized viewpoint lattice

Ray-tracing of the optimized light source positions

Optimized light source array

Fig. 5

Fig. 6

Fig. 7

Fig. 8

**Patent documents cited in the description**

- US 20180160784 A1
- US 2020049995 A1